# EUROPÄISCHE PATENTSCHRIFT

(11) **EP 4 159 968 B1**
(45) Veröffentlichungstag und Bekanntmachung des Hinweises auf die Patenterteilung: **09.07.2025**
(21) Anmeldenummer: 22198797.7
(22) Anmeldetag: 29.09.2022
(51) Int. Cl.: E05F 15/622, F16H 25/20

(54) **ANTRIEB FÜR EINE KLAPPE**
DRIVE FOR A FLAP
ENTRAÎNEMENT POUR UN CLAPET

(30) Priorität: 29.09.2021 DE 102021125312; 05.09.2022 DE 102022122464
(43) Veröffentlichungstag der Anmeldung: 05.04.2023
(73) Patentinhaber: Minebea AccessSolutions Deutschland GmbH, 85253 Erdweg (DE)
(72) Erfinder: BITTNER, Eric, 85253 Erdweg (DE); DIETL, Armin, 85253 Erdweg (DE); SIERP, Yvan, 85253 Erdweg (DE); WINKER, Martin, 85253 Erdweg (DE); DEUTSCHMANN, Nicolai, 85253 Erdweg (DE)
(74) Vertreter: Prinz & Partner mbB

(56) Entgegenhaltungen:
- WO-A1-2013/004702
- WO-A1-2013/013313
- WO-A1-2018/215342
- WO-A1-2019/138068
- WO-A1-2019/194143
- WO-A1-2020/016300
- WO-A1-2021/081664
- FR-A1- 2 599 072

## Beschreibung

Die Erfindung betrifft einen Antrieb für eine Klappe, wobei der Antrieb ein Gehäuse, einen Motor und einen Spindelantrieb aufweist, wobei der Motor und der Spindelantrieb antriebstechnisch miteinander verbunden sind und eine motorische Verstellung der Klappe ermöglichen, wobei der Antrieb die Klappe mindestens in eine geöffnete Position und eine geschlossene Position verfährt, wobei der Spindelantrieb eine Gewindespindel mit einer Mutter und ein Schubrohr aufweist und das Schubrohr über die Mutter mit der Gewindespindel verbunden ist, wobei das Schubrohr durch eine translatorische Bewegung verfahren wird.

Der erfindungsgemäße Antrieb kann zur Verstellung von einer Vielzahl von unterschiedlichen Klappen eines Fahrzeugs genutzt werden. So ist unter den Begriff Klappe sowohl eine Heckklappe, eine Kofferraumklappe oder eine Motorhaube zu verstehen, als auch eine Seitentür, eine Schiebetür oder ein Laderaumboden.

Aus dem Stand der Technik sind entsprechenden Antriebe für Klappen bekannt. Beispielsweise offenbart die DE 10 2018 117 413 A1 einen entsprechenden Antrieb mit einem Spindel-Spindelmuttergetriebe. Der Antrieb ist schwenkbar an einer Klappe angeordnet und schwenkbar mit einer Fahrzeugkarosserie verbunden.

Nachteilig an diesem Antrieb ist der große Bauraumbedarf, da diese Art von Antrieben auch in Seitentüren eingebaut werden, in welchen sehr beengte Platzverhältnisse vorherrschen und sehr hohe Anforderungen an die Antriebe gestellt werden, insbesondere an deren optischen Erscheinung, der akustischen Wahrnehmbarkeit und der Abdichtung der Antriebe gegenüber Umwelteinflüssen, wie beispielsweise in die Tür eintretendes Wasser.

Die WO 2019/194143 A1 zeigt einen linearen Bewegungsmechanismus mit einer Kugelumlaufspindel und einem elektrischen Aktuator, der die Kugelumlaufspindel enthält.

Die FR 2 599 072 A1 offenbart eine Verstellvorrichtung für ein Dachfenster, die auf Umwelteinflüsse wie Luftfeuchtigkeit, Regen oder Licht reagiert.

In der WO 2018/215342 A1 ist eine Vorrichtung mit einem steuerbaren Drehdämpfer offenbart, wobei der Drehdämpfer wenigstens eine magnetorheologische Übertragungsvorrichtung umfasst.

Die WO 2013/004702 A1 offenbart eine Betätigungsvorrichtung zur automatischen Betätigung der Fahrzeugtür eines Kraftfahrzeugs, die eine Anordnung von teleskopartig aus- und einfahrbaren rohrförmigen Gehäuseteilen umfasst und die äußere Form einer gasgefüllten Feder aufweist.

In der WO 2013/013313 A1 ist ein System zum Öffnen und Schließen einer Fahrzeugtür gezeigt, wobei die Fahrzeugtür um eine vertikale Achse schwenkt.

In der WO 2019/138068 A1 ist ein motorisiertes Antriebssystem zur Betätigung einer Tür gezeigt, mit einer Getriebebaugruppe, einer Spindelbaugruppe und einer Antriebsbaugruppe.

Die WO 2020/016300 A1 zeigt eine Antriebsanordnung eines Kraftfahrzeugs zur motorischen Verstellung einer Seitentür eines Kraftfahrzeugs mittels linearer Antriebsbewegungen.

In der WO 2021/081664 A1 ist eine elektrische Betätigungsvorrichtung für eine Fahrzeugseitentür offenbart.

Es ist daher die Aufgabe der Erfindung, die bekannten Nachteile zu beseitigen und auf diese Weise die bekannten Antriebe verbessern.

Diese Aufgabe wird bei einem Antrieb der eingangs genannten Art dadurch erreicht, dass der Spindelantrieb innerhalb eines Rotors angeordnet ist und der Motor den Rotor antreibt, wobei der Rotor mit der Gewindespindel über einen Adapter verbunden ist, welcher mit dem Rotor drehfest verbunden ist und eine Überlastkupplung aufweist. Hierzu kann der Rotor eine hohlzylindrische Geometrie aufweisen. Dadurch sind die Gewindespindel und das Schubrohr radial von dem Rotor umgeben, wobei das Schubrohr aus dem Rotor verfahren werden kann und das Schubrohr auch wieder in den Rotor hinein verfahren werden kann. Somit ist der Rotor auf einer Stirnseite verschlossen, insbesondere wasserdicht verschlossen und auf der gegenüberliegenden Stirnseite weißt der Rotor eine Öffnung auf, aus welcher mindestens das Schubrohr herausragen kann.

In einer weiteren Ausgestaltung kann der Spindelantrieb mindestens teilweise aus dem Gehäuse herausragen. Dadurch weist das Gehäuse in Richtung des Spindelantriebs kleinere Abmessungen auf, wodurch das Gehäuse einen geringeren Bauraum beansprucht.

In einer weiteren Ausgestaltung ist zwischen dem Gehäuse und dem Rotor mindestens ein Lager angeordnet. Dadurch ist der Rotor drehbar im Gehäuse angeordnet und kann sich unabhängig von dem Gehäuse drehen.

In einer weiteren Ausgestaltung ist ein Zahnrad bzw. ein Stirnrad mit dem Rotor verbunden, insbesondere ist das Zahnrad bzw. das Stirnrad drehfest mit dem Rotor verbunden. Vorzugsweise sind das Zahnrad bzw. das Stirnrad und der Rotor einteilig ausgebildet. Aufgrund dieses Zahnrads kann die Drehbewegung des Motors auf den Rotor übertragen werden. Vorzugsweise sind dazu die Motorausgangswelle sowie das Zahnrad des Rotors innerhalb des Gehäuses angeordnet.

Gemäß der Erfindung sind der Motor und der Spindelantrieb über die erste Getriebestufe, die insbesondere ein Schneckenradgetriebe ist, antriebstechnisch verbunden, wobei die erste Getriebestufe den Rotor antreibt. Insbesondere treibt der Motor über die erste Getriebestufe, insbesondere dem Schneckenradgetriebe, eine zweite Getriebestufe, insbesondere ein Stirnradgetriebe, an, welches wiederrum den Rotor antreibt. Somit überträgt das Stirnrad das Drehmoment auf das Zahnrad bzw. auf das Stirnrad des Rotors, welches radial und axial fest, insbesondere drehfest mit dem Rotor verbunden ist. Mit anderen Worten treibt der Motor über mindestens eine Getriebestufe, bevorzugt über zwei Getriebestufen, den Rotor an. Der Adapter ist mit dem Rotor drehfest verbunden und überträgt das Drehmoment vom Rotor auf die Gewindespindel. Vorzugsweise sind der Adapter und der Rotor einteilig ausgebildet. Der Rotor und die Gewindespindel sind fest miteinander verbunden. Somit kommt es zu einer Drehbewegung der Spindel.

Bevorzugt ist zwischen dem Motor und der ersten Getriebestufe, insbesondere dem Schneckenradgetriebe, eine Oldham-Kupplung und/oder eine flexible Welle angeordnet. Dadurch kann ein Versatz zwischen der Motorausgangswelle und der ersten Getriebestufe ausgeglichen werden. Alternativ kann zwischen dem Motor und der ersten Getriebestufe, insbesondere dem Schneckenradgetriebe, eine starre Welle angeordnet sein

Durch eine Ausgestaltung mit nur einer Getriebestufe, können die Abmessungen des Antriebs weiter verringert werden. Dazu kann der Adapter mit dem Rotor fest verbunden sein. In dem Adapter können beispielsweise Federbleche drehfest formschlüssig fixiert sein. Die Federbleche sind auf der Gewindespindel mit einer definierten Vorspannung montiert und der Adapter ist drehbar auf der Gewindespindel montiert. Zusätzlich kann ein Sicherungsring an dem Adapter vorgesehen sein, welcher eine Axialverschiebung zwischen der Gewindespindel und dem Adapter verhindert. Bei einer Überschreitung eines bestimmten Drehmoments oder bei der Einwirkung einer Lastspitze auf das System, können die Federbleche und die Gewindespindel gegeneinander durchrutschen.

Weiterhin ist es auch möglich, dass anstatt von Federblechen ein Spannstift als Überlastkupplung dient. Dazu ist in dem Adapter eine Aufnahmebohrung für den Spannstift eingebracht. Der Adapter kann einteilig aus gehärtetem Stahl oder aus Kunststoff mit einem gehärteten Einlegeteil ausgeführt sein. In die Aufnahmebohrung des Adapters wird der Spannstift mit einer Seite eingepresst. Die andere Seite des Spannstiftes wird in eine Aufnahmebohrung der Gewindespindel eingepresst. Dadurch kann ein Drehmoment vom Adapter über den Spannstift auf die Gewindespindel übertragen werden. Dies geschieht über den Reibschluss zwischen dem Adapter und dem Spannstift sowie über den Reibschluss zwischen der Gewindespindel und dem Spannstift. Bei einer Überschreitung eines bestimmten Drehmoments oder bei der Einwirkung einer Lastspitze auf das System, können der Adapter, der Spannstift und/oder die Gewindespindel gegeneinander durchrutschen. Um die Reibung in axialer Richtung zu minimieren kann ein Axiallager auf der Gewindespindel vorgesehen sein. Eine Axialsicherung kann über Sicherungsscheiben, welche zwischen dem Adapter und der Gewindespindel angeordnet sind, realisiert werden. In einer weiteren Ausgestaltung weist der Spindelantrieb zusätzlich ein Führungsrohr auf, worüber eine Drehmomentabstützung des Schubrohrs erfolgt. Dazu kann das Führungsrohr mit einem Gehäusedeckel verbunden sein, insbesondere drehfest verbunden sein. Vorzugsweise können das Führungsrohr und der Gehäusedeckel einteilig ausgebildet sein. Der Gehäusedeckel verschließt dabei eine Öffnung im Gehäuse. Somit ist das Schubrohr mit der Gewindespindel über die Mutter bzw. ein Innengewinde verbunden. Dadurch kann die Drehbewegung des Motors in eine translatorische Bewegung umgewandelt werden. Um dies zu ermöglichen wird das Drehmoment an dem Schubrohr am Führungsrohr, welches drehfest mit dem Gehäuse über den Gehäusedeckel verbunden ist, abgestützt. Der Gehäusedeckel und das Führungsrohr können dabei auch einteilig ausgebildet sein.

In einer weiteren Ausgestaltung ist an einem Ende des Schubrohrs eine Anbindungsstelle angeordnet, welche mit einer Fahrzeugkarosserie verbunden wird, wobei das Schubrohr und die Anbindungsstelle miteinander verbunden sind, insbesondere sind das Schubrohr und die Anbindungsstelle in axialer Richtung fest verbunden und/oder das Schubrohr und die Anbindungsstelle sind drehfest verbunden. Die Anbindungsstelle kann dabei insbesondere in Form eines Kugelgelenks oder in Form einer Durchgangsbohrung ausgebildet sein. Weiterhin kann die Verbindungstelle auch eine Drehmomentabstützung für das Schubrohr bereitstellen. Vorzugsweise ist die Anbindungsstelle um eine Schwenkachse schwenkbar, wobei die Schwenkachse der Anbindungsstelle parallel zur Drehachse des Motors verläuft. Alternativ kann die Schwenkachse der Anbindungsstelle und die Drehachse des Motors genau einen Schnittpunkt aufweisen. Somit können die Schwenkachse der Anbindungsstelle und die Drehachse des Motors winklig zueinander angeordnet sein.

In einer weiteren Ausgestaltung ist der Antrieb über einen Halter an der Klappe befestigt. Bevorzugt ist das Gehäuse in dem Halter über mindestens zwei Lagerstellen gehalten, wobei eine Lagerstelle in der Nähe des Motors angeordnet sein kann, insbesondere zwischen dem Motor und dem Spindelantrieb und eine weitere Lagerstelle in axialer Richtung der ersten Lagerstelle auf der gegenüberliegenden Seite des Spindelantriebs. Weiterhin kann der Halter eine im Querschnitt U-förmige Geometrie aufweisen. Dadurch ist das Gehäuse schwenkbar im Halter gelagert und der Halter wird fest mit der Klappe verschraubt, insbesondere innerhalb einer Tür mit dieser verschraubt.

In einer weiteren Ausgestaltung sind eine Drehachse des Motors und eine Drehachse des Spindelantriebs windschief zueinander angeordnet. Somit sind die Drehachse des Motors und die Drehachse des Spindelantriebs nicht parallel zueinander und weisen einen Winkeln größer 0° zueinander auf. Bevorzugt sind die Drehachse des Motors und die Drehachse des Spindelantriebs in einem Winkel zwischen 30° und 90° zueinander angeordnet, besonders bevorzugt sind die Drehachse des Motors und die Drehachse des Spindelantriebs orthogonal zueinander angeordnet. Alternativ können die Drehachse des Motors und die Drehachse des Spindelantriebs genau einen Schnittpunkt aufweisen. Weiterhin kann der Antrieb um eine Schwenkachse schwenkbar gelagert sein, wobei vorzugsweise die Schwenkachse parallel zu der Drehachse des Motors verläuft. Dadurch wird eine Schwenkbewegung des Antriebs relativ zur Klappe ermöglicht. Alternativ kann entsprechend der Einbaubedingungen die Schwenkachse windschief zu der Drehachse des Motors verlaufen oder die Schwenkachse und die Drehachse des Motors weisen genau einen Schnittpunkt auf.

In einer weiteren Ausgestaltung ist an dem Rotor eine Abtastscheibe angeordnet, welche von einem Sensor, der innerhalb des Gehäuses angeordnet ist, abgetastet wird. Dabei kann die Abtastscheibe sowohl magnetisch sein als auch eine optische Abtastscheibe, wobei die Abtastscheibe eine Codierung aufweist, welche von dem Sensor abgetastet werden kann und dadurch ein Drehwinkel bestimmt werden kann. Somit ist an dem Rotor ein Drehgeber angeordnet. Dabei kann der Sensor den Drehwinkel absolut oder relativ bestimmen. Besonders bevorzugt wird ein Inkrementaldrehgeber verwendet.

Alternativ kann zur Bestimmung des Drehwinkels beispielsweise ein Sensor, insbesondere ein Inkrementalsensor, vorgesehen sein, wobei die Abtastscheibe bzw. Codierung, insbesondere eine Magnetscheibe, fest mit der Gewindespindel verbunden ist. Das Material des Schubrohrs ist bevorzugt nicht ferromagnetisch, so dass keine Abschirmung eines Magnetfelds möglich ist. Der Sensor ist dabei bevorzugt an bzw. in dem Gehäuse befestigt. Der Inkrementalsensor kann die Polwechsel der Magnetscheibe erfassen und so den Drehwinkel der Gewindespindel bestimmen. In einer weiteren Ausgestaltung ist mindestens jeweils eine Abdichtung zwischen dem Schubrohr und dem Gehäuse und zwischen dem Rotor und dem Gehäuse angeordnet. Dabei kann die Abdichtung des Schubrohrs zusätzlich einen Abstreifer bzw. einen abstreifenden Effekt aufweisen, so dass mögliche Verunreinigungen nicht in das Gehäuse eindringen können. Weiterhin wird dadurch eine Verschmutzung der Funktionsflächen der Gewindespindel ausgeschlossen und der Antrieb ist geschützt vor eindringen Wasser oder Verunreinigungen.

In einer weiteren Ausgestaltung kann zwischen dem Motor und dem Spindelantrieb eine Hysteresebremse angeordnet sein. Aufgrund der Hysteresebremse kann die Drehachse des Motors gebremst werden, wodurch ein Halten der Klappe, insbesondere der Fahrzeugtür, in allen Positionen und Fahrzeuglagen erfolgen kann.

In einer weiteren Ausgestaltung kann in unmittelbarer Nähe zu dem Antrieb oder an dem Antrieb bzw. an oder in dem Gehäuse des Antriebs ein Sensor angeordnet sein, welcher einen Schwenkwinkel des Antriebs detektiert. Vorzugsweise ist an dem Antrieb eine Codierung angeordnet, welche von dem Sensor abgetastet wird und dadurch einen Schwenkwinkel des Antriebs detektieren kann. Vorzugsweise ist die Codierung an dem Motor oder an einem Gehäuse des Motors angeordnet, insbesondere erstreckt sich die Codierung mindestens teilweise über den Außenumfangs des Motors oder des Gehäuses des Motors. Somit kann sich die Codierung nur über den Bereich des Motors oder des Gehäuses des Motors erstrecken, welcher dem maximalen Schwenkwinkel des Antriebs entspricht. Insbesondere ist der Sensor an dem Halter angeordnet. Die Codierung kann dabei beispielsweise auf einer Codescheibe oder Abtastscheibe aufgebracht werden, welche an dem Motor oder an dem Gehäuse des Motors angeordnet ist oder direkt an dem Motor bzw. an dem Gehäuse des Motors aufgebracht werden. Weiterhin kann die Codierung beispielsweise in Form einer Verzahnung an dem Motor oder dem Gehäuse des Motors angeordnet sein, insbesondere können die Verzahnung und das Gehäuse des Motors einteilig ausgebildet sein. Der Sensor kann ein Magnetsensor, ein optischer Sensor, ein induktiver Sensor oder ein kapazitiver Sensor sein. Entsprechend des Funktionsprinzips des Sensors ist auch die Codierung ausgebildet.

Alternativ kann die Codierung auch an dem Halter angeordnet sein und der Sensor an oder in dem Gehäuse des Motors angeordnet sein.

Bevorzugt handelt es sich um einen Inkrementalsensor, bei dem die Markierungen bzw. Codierungen gezählt werden oder um einen Absolutsensor, welcher eine Codierung aufweist, die eindeutig den Schwenkwinkel definiert. Dadurch kann eine absolute Position des Antriebs bestimmt werden und diese mit der Position des Spindelantriebs verglichen werden. Beispielsweise kann nach einem Stromausfall dadurch die Position des Spindelantriebs bestimmt werden ohne dass eine Referenzfahrt des Spindelantriebs notwendig ist.

Weiterhin kann ein Magnet an dem Halter angeordnet sein, welcher sich über einen im Gehäuse untergebrachten Sensor bewegt, wobei der Sensor beispielsweise ein 2D oder 3D Hallsensor sein kann.

Aufgrund des Sensors und der Codierung kann der aktuelle Schwenkwinkel des Antriebs und somit auch der aktuelle Schwenkwinkel der Klappe detektiert werden. Dadurch kann unter Zuhilfenahme weiterer Sensoren beispielsweise eine Hinderniserkennung und eine unbeabsichtigte Türbewegung erkannt werden. Beispielsweise kann für eine Hinderniserkennung der Schwenkwinkel und ein Drehmoment des Antriebs bestimmt werden und sobald das Drehmoment einen Grenzwert übersteigt kann das verschwenken der Klappe unterbrochen werden.

Weitere Merkmale und Vorteile der Erfindung ergeben sich aus der nachfolgenden Beschreibung sowie aus den beigefügten Zeichnungen, auf die im Folgenden Bezug genommen wird. In den Zeichnungen zeigen:
- Figur 1 eine perspektivische Ansicht eines nicht erfindungsgemäßen Antriebs,
- Figur 2 eine perspektivische Ansicht des Motors, des Spindelantriebs und des Getriebes,
- Figur 3 einen Schnitt des Spindelantriebs sowie von Teilen des Antriebs,
- Figur 4 einen Schnitt gemäß Figur 3 mit einem zusätzlichen Führungsrohr,
- Figur 5 eine perspektivische Ansicht des Halters und des Antriebs
- Figur 6 eine perspektivische Ansicht von ausgewählten Bauteilen des Antrieb
- Figur 7 eine perspektivische Ansicht eines erfindungsgemäßen Antriebs mit einer Getriebestufe
- Figur 8 a - f zeigen jeweils einen Schnitt durch einen Teil des Antriebs aus Figur 7 mit verschiedenen Ausgestaltungen der Überlastkupplung
- Figur 9 eine Schnittansicht des Antriebs aus Figur 7
- Figur 10 einen Teil einer Gewindespindel mit einer Abtastscheibe gemäß Figur 9

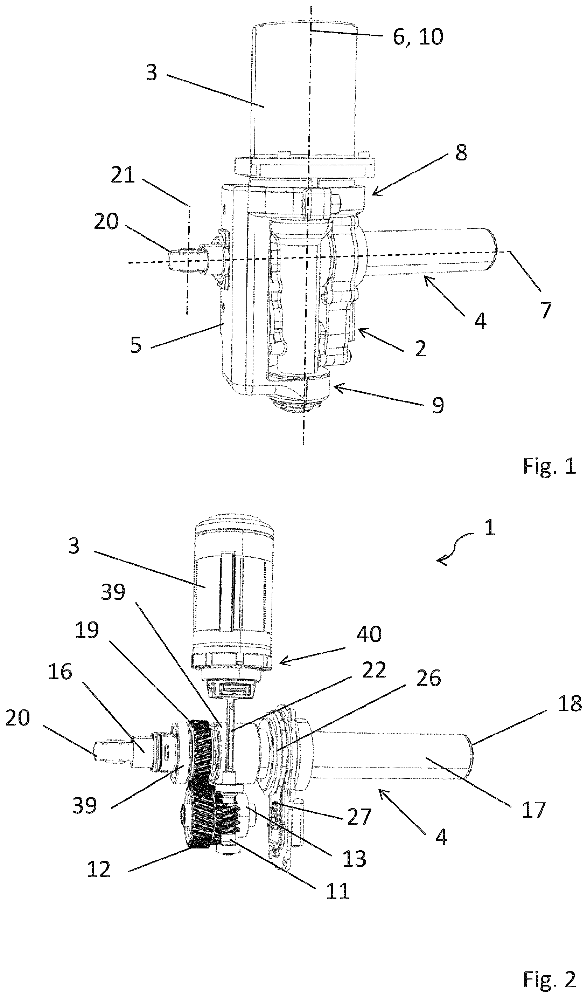

Figur 1 zeigt eine perspektivische Ansicht eines nicht erfindungsgemäßen Antriebs 1 für eine Klappe, wobei der Antrieb 1 ein Gehäuse 2, einen Motor 3 und einen Spindelantrieb 4 aufweist, wobei der Motor 3 und der Spindelantrieb 4 antriebstechnisch miteinander verbunden sind und eine motorische Verstellung der Klappe ermöglichen, wobei der Antrieb 1 die Klappe mindestens in eine geöffnete Position und eine geschlossene Position verfährt. Zur Befestigung des Antriebs 1 an oder in einer Klappe ist ein Halter 5 vorgesehen, welcher den Antrieb 1 aufnimmt. Weiterhin sind eine Drehachse 6 des Motors 3 und eine Drehachse 7 des Spindelantriebs 4 orthogonal zueinander angeordnet. Der Halter 5 ermöglicht ein verschwenken des Antriebs 1, da der Antrieb 1 durch eine erste Lagerstelle 8 und durch eine zweite Lagerstelle 9 in dem Halter schwenkbar gelagert ist. Vorzugsweise handelt es sich bei den Lagerstellen 8, 9, um Gleitlager, welche zwischen dem Gehäuse 2 und dem Halter 5 angeordnet sind. Somit weist der Antrieb 1 eine Schwenkachse 10 auf, welche parallel zu der Drehachse 6 des Motors 3 verläuft. Dadurch wird eine Schwenkbewegung des Antriebs 1 relativ zur Klappe ermöglicht.

Weiterhin ist an einem Ende des Schubrohrs 16 eine Anbindungsstelle 20 angeordnet, welche mit einer Fahrzeugkarosserie verbunden wird, wobei das Schubrohr 16 und die Anbindungsstelle 20 in axialer Richtung fest miteinander verbunden sind und/oder das Schubrohr 16 und die Anbindungsstelle 20 drehfest miteinander verbunden sind. Die Anbindungsstelle 20 kann dabei insbesondere in Form eines Kugelgelenks oder in Form einer Durchgangsbohrung ausgebildet sein. Weiterhin kann die Verbindungstelle 20 auch eine Drehmomentabstützung für das Schubrohr 16 bereitstellen. Vorzugsweise ist die Anbindungsstelle 20 um eine Schwenkachse 21 schwenkbar, wobei die Schwenkachse 21 der Anbindungsstelle 20 parallel zur Drehachse 6 des Motors 3 verläuft.

Figur 2 zeigt eine perspektivische Ansicht des Motors 3, des Spindelantriebs 4 und der Getriebestufen 11, 12. Der Motor 3 kann beispielsweise ein bürstenloser Motor sein. Die Getriebestufen 11, 12, bestehen aus zwei Getriebestufen 11, 12, wobei die erste Getriebestufe 11 ein Schneckenradgetriebe 11 ist und die zweite Getriebestufe 12 ein Stirnradgetriebe 12 ist. Die erste Getriebestufe 11 ist mit der zweiten Getriebestufe 12 über eine Überlastkupplung 13 verbunden. Der Motor 3 kann mit der ersten Getriebestufe 11 über eine flexible Welle 22 verbunden sein und/oder zwischen dem Motor 3 und der Antriebswelle 22 ist eine Oldham Kupplung angeordnet.

Des Weiteren ist zwischen dem Motor 3 und dem Spindelantrieb 4 eine Hysteresebremse 40 angeordnet. Dadurch kann die Drehachse 6 des Motors 3 gebremst werden, wodurch ein Halten der Klappe, insbesondere der Fahrzeugtür, in allen Positionen und Fahrzeuglagen erfolgen kann.

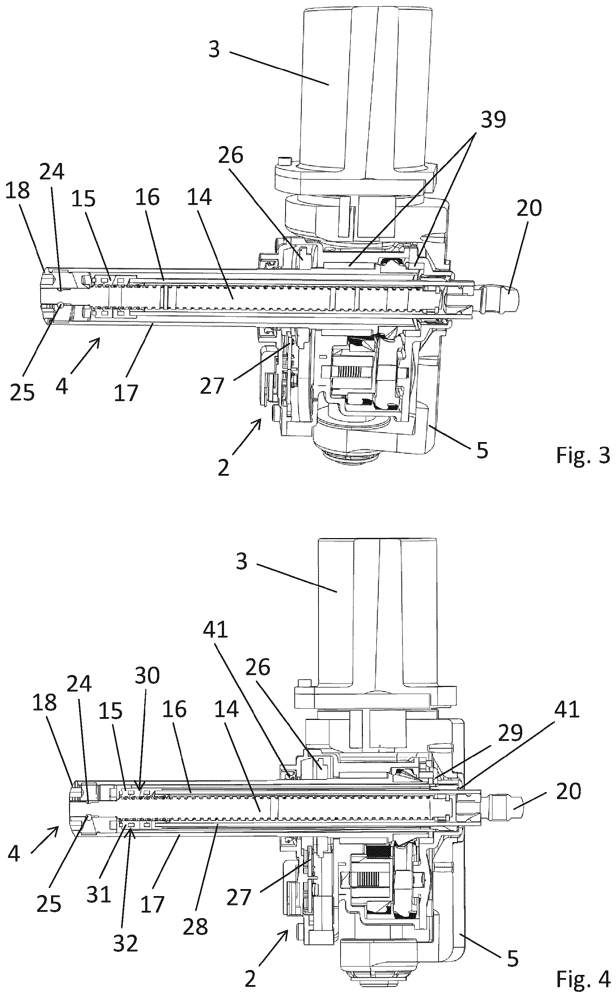

Figur 3 zeigt einen Schnitt des Spindelantriebs 4 sowie einen Schnitt von Teilen des Antriebs 1. Der Spindelantrieb 4 umfasst eine Gewindespindel 14 mit einer Mutter 15 und einem Schubrohr 16, wobei das Schubrohr 16 über die Mutter 15 mit der Gewindespindel 14 verbunden ist und das Schubrohr 16 durch eine translatorische Bewegung verfahren wird. Der Spindelantrieb 4 ist innerhalb eines Rotors 17 angeordnet und der Motor 3 treibt den Rotor 17 über die Getriebestufen 11, 12 an, wobei der Rotor 17 mit der Gewindespindel 14 verbunden ist, insbesondere drehfest und eine hohlzylindrische Geometrie aufweist. Dazu ist mit dem Rotor 17 ein Zahnrad 19 bzw. ein Stirnrad 19 verbunden, insbesondere drehfest verbunden. Das Zahnrad 19 des Rotors 17 ist mit der zweiten Getriebestufe 12 verbunden und wird durch diese angetrieben.

Weiterhin ist der Rotor 17 mit der Gewindespindel 14 über einen Adapter 18 verbunden, insbesondere drehfest verbunden. Der Adapter 18 ist an einer Stirnseite des Rotors 17 angeordnet, wobei der Adapter 18 mit dem Rotor 17 formschlüssig und/oder kraftschlüssig verbunden ist. Die Gewindespindel 14 ist mit dem Adapter 18 ebenfalls formschlüssig und/oder kraftschlüssig verbunden, wobei die Gewindespindel 14 bevorzugt eine Außenverzahnung aufweist und der Adapter 18 eine entsprechende Innenverzahnung. Dadurch dreht sich die Gewindespindel 14 mit derselben Drehzahl und Geschwindigkeit wie der Rotor 17. Zusätzlich kann die Gewindespindel 14 eine umlaufende Nut 24 aufweisen, welche innerhalb des Adapters 18 angeordnet ist. Dazu kann in dem Adapter 18 ein Stift 25 angeordnet sein, welcher mit dem Adapter 18 verbunden ist. Dadurch erfolgt eine zusätzliche Lagesicherung der Gewindespindel 14. Alternativ kann die Gewindespindel 14 eine Axialsicherung aufweisen.

Die Gewindespindel 14 und das Schubrohr 16 sind radial von dem Rotor 17 umgeben, wobei das Schubrohr 16 aus dem Rotor 17 verfahren werden kann und das Schubrohr 16 auch wieder in den Rotor 17 hinein verfahren werden kann. Somit ist der Rotor 17 auf einer Stirnseite verschlossen, insbesondere durch den Adapter 18 und besonders bevorzugt wasserdicht verschlossen und auf der gegenüberliegenden Stirnseite weißt der Rotor 17 eine Öffnung auf, aus welcher mindestens das Schubrohr 16 herausragen kann.

Um eine Drehmomentabstützung des Schubrohrs 16 zu gewährleisten kann das Schubrohr 16 eine ovale oder mehreckige Geometrie aufweisen und im Gehäuse 2 und/oder in dem Halter 5 kann eine der Geometrie des Schubrohrs 16 entsprechende Aussparung vorhanden sein. Dadurch verhindert die Aussparung in dem Gehäuse und/oder dem Halter eine Verdrehung des Schubrohrs 16 und dient somit als eine Drehmomentabstützung. Des Weiteren kann die Verbindungstelle 20 auch eine Drehmomentabstützung für das Schubrohr 16 bereitstellen, indem die Verbindungstelle 20 eine in axialer Richtung feste Verbindung und/oder eine drehfeste Verbindung zu der Fahrzeugkarosserie aufweist, wobei die Verbindungstelle 20 mit der Fahrzeugkarosserie orthogonal zu der Schwenkachse 21 der Anbindungsstelle 20 in axialer Richtung fest ausgebildet ist und/oder drehfest ausgebildet ist.

Weiterhin ist an dem Rotor 17 eine Abtastscheibe 26 angeordnet, welche von einem Sensor 27, der innerhalb des Gehäuses 2 angeordnet ist, abgetastet wird. Die Abtastscheibe 26 kann sowohl magnetisch sein als auch eine optische Abtastscheibe 26 sein, wobei die Abtastscheibe 26 eine Codierung aufweist, welche von dem Sensor 27 abgetastet werden kann und dadurch ein Drehwinkel bestimmt werden kann. Der Sensor 27 kann den Drehwinkel absolut oder relativ bestimmen.

Für die Lagerung des Rotors 17 sind innerhalb des Gehäuses 2 zwei Lagerstellen 39 vorgesehen.

Figur 4 zeigt einen Schnitt gemäß Figur 3 mit einem zusätzlichen Führungsrohr 28. Das Führungsrohr 28 ist zwischen dem Schubrohr 16 und dem Rotor 17 angeordnet. Somit besteht der Spindelantrieb 4 in diesem Ausführungsbeispiel aus der Gewindespindel 14 mit der Mutter 15, dem Schubrohr 16 und dem Führungsrohr 28, wobei das Führungsrohr 28 als Drehmomentabstützung für das Schubrohr 16 dient. Dazu ist das Führungsrohr 28 mit einem Gehäusedeckel 29 verbunden, insbesondre drehfest verbunden. Der Gehäusedeckel 29 verschließt dabei eine Öffnung im Gehäuse 2. Somit ist das Schubrohr 16 mit der Gewindespindel 14 über die Mutter 15 bzw. ein Innengewinde verbunden. Dadurch kann die Drehbewegung des Motors 3 in eine translatorische Bewegung umgewandelt werden. Um dies zu ermöglichen wird das Drehmoment an dem Schubrohr 16 am Führungsrohr 28, welches drehfest mit dem Gehäuse 2 über den Gehäusedeckel 29 verbunden ist, abgestützt. Der Gehäusedeckel 29 und das Führungsrohr 28 können dabei auch einteilig ausgebildet sein.

Vorzugsweise ist die Mutter 15 aus Kunststoff gefertigt. Vorteilhaft wird die Mutter 15 durch Einspritzen durch Öffnungen direkt am Schubrohr 16 gefertigt und eingepasst. Dadurch wird eine stabile und widerstandfähige Verbindung zwischen dem Schubrohr 16 und der Mutter 15 hergestellt. Vorteilhafterweise besitzt die Mutter 15 in Längsrichtung jeweils zwei, über eine Brücke verbundene Haltefortsätze, die in zwei, in Längsrichtung hintereinander liegende Öffnungen im Schubrohr 16 eingreifen. Somit ist ein optimaler Halt gewährt. Am Schubrohr 16 sind zur Halterung der Mutter 15 am Schubrohr 16 Öffnungen 30 am Außenumfang vorgesehen. Vorteilhafterweise sind vier, regelmäßig über den Umfang verteilte Paare von Öffnungen 30 vorgesehen, wobei die Öffnungen 30 eines Paares in Längsrichtung des Schubrohres 16 hintereinander liegen. Alternativ können auch mehrere in Längsrichtung hintereinander liegende Öffnungen 30 und zugeordnete, über jeweils eine Brücke 32 verbundene Haltevorsätze 31 vorgesehen sein, so dass die Haltekräfte pro Haltefortsatz 31 verringert sind und auch Risiken bei eventuellen Bruch eines einzelnen Haltefortsatz 31 noch effizienter vorgebeugt werden kann.

In einer weiteren alternativen Ausgestaltung können auch nur mindestens zwei, bevorzugt vier, regelmäßig über den Umfang verteilte Öffnungen 30 vorgesehen sein. Dabei wird eine Brücke 32 zwischen zwei Haltefortsätzen 31 dadurch gebildet, dass die Mutter 15 über eine Stirnseite des Schubrohrs 16 hinaus steht und dieser Überstand einen ersten Haltefortsatz 31 bildet und die Brücke 32 zwischen diesem Überstand der Mutter 15 und dem Haltefortsatz 31 erfolgt, der durch die Öffnung 30 ragt.

Aufgrund der Haltefortsätze 31 und der damit verbundenen Brücken 32, welche über das Schubrohr 16 herausragen, können die Brücken 32 in entsprechende Nuten im Führungsrohr 28 eingreifen und dadurch eine Drehmomentabstützung des Schubrohrs 16 erfolgen.

Weiterhin ist jeweils eine Abdichtung 41 zwischen dem Schubrohr 16 und dem Gehäuse 2 und zwischen dem Rotor 17 und dem Gehäuse 2 angeordnet.

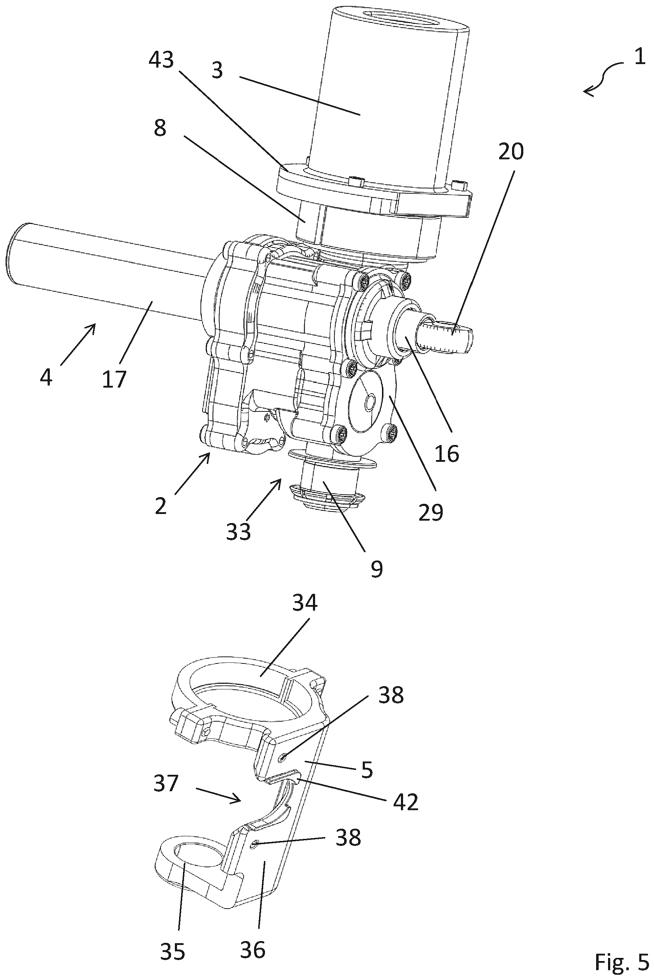

Figur 5 zeigt eine perspektivische Ansicht des Halters 5 und des Antriebs 1. Der Halter 5 umschließt das Gehäuse 2 unterhalb des Motors 3 und unterhalb des Spindelantriebs 4 bzw. in axialer Richtung der ersten Lagerstelle 8 auf der gegenüberliegenden Seite des Spindelantriebs 4. Dazu ist an dem Gehäuse 2 ein Fortsatz 33 angeformt. In dem Bereich in dem der Halter 5 das Gehäuse 2 umschließt, weißt das Gehäuse 2 eine zylinderförmige Geometrie auf. Weiterhin sind in diesen Bereichen jeweils mindestens ein Lager 8, 9, angeordnet. Der Halter 5 weist eine im Querschnitt U-förmige Geometrie auf, welche aus zwei Aufnahmen 34, 35, besteht und die beiden Aufnahmen 34, 35, über einen Verbindungssteg 36 miteinander verbunden sind.

Im Bereich unterhalb des Motors 3 weist der Halter 5 eine erste hohlzylindrische Aufnahme 34 auf, welche vorzugsweise zweiteilig ausgestaltet ist. Dabei bildet jeder Teil einen Halbkreis. Die beiden Teile können nach dem Einsetzen des Antriebs 1 miteinander kraftschlüssig, formschlüssig und/oder stoffschlüssig verbunden werden, insbesondere können die beiden Teile verschraubt oder verschweißt werden. Unterhalb des Spindelantriebs 4 bzw. in axialer Richtung der ersten Lagerstelle 8 auf der gegenüberliegenden Seite des Spindelantriebs 4, ist eine zweite hohlzylindrische Aufnahme 35 angeordnet, in die das Gehäuse 2 hineingesteckt wird.

Der Verbindungssteg 36 weist eine Aussparung 37 für die Schubstange 16 und die Anbindungsstelle 20 auf. Die Aussparung 37 ist von den Abmessungen so konturiert, dass der Antrieb 1 schwenken kann. Um den Zusammenbau von dem Antrieb 1 und dem Halter 5 zu erleichtern, ist es vorteilhaft, wenn die Aussparung 37 eine U-förmige Aussparung 37 ist und somit zu einer Seite des Halters 5 offen ist. Auch kann dadurch der Verbindungssteg 36 mit einer geringeren Breite konstruiert werden. Weiterhin kann an der Aussparung 37 eine Zentrierung 42 angeordnet sein, indem am äußeren Umfangsrand der Aussparung 37 ein hervorstehender Rand 42 angeordnet ist. An dem Verbindungssteg 36 sind mindestens zwei Bohrungen 38 angeordnet, durch welche der Halter 5 an der Klappe verschraubt wird. Zusätzlich kann an dem Verbindungssteg 36 mindestens eine Zentrierung vorgesehen sein, welche eine Positionierung des Antriebs 1 erleichtert. Die Zentrierung kann beispielsweise in Form eines Kegels ausgestaltet sein, welcher in entsprechende Ausnehmungen in der Klappe eingeführt wird.

Des Weiteren können anstatt der Bohrungen 38 auch Stehbolzen an dem Verbindungssteg 36 angeordnet sein bzw. können an dem Halter 5 Stehbolzen angeordnet sein und der Halter 5 wird über die Stehbolzen mit der Klappe verbunden. Durch die Stehbolzen ist sowohl eine Führung als auch eine Zentrierung gegeben und es ist keine zusätzliche Zentrierung notwendig.

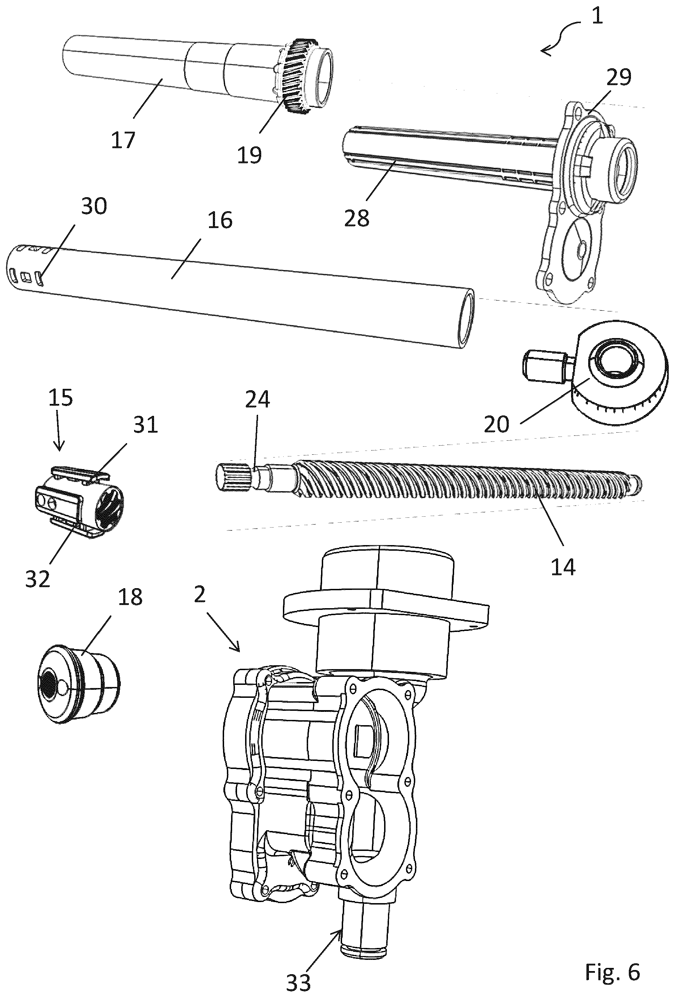

Des Weiteren kann in unmittelbarer Nähe zu dem Antrieb 1 ein Sensor angeordnet sein, welcher einen Schwenkwinkel des Antriebs 1 detektiert. Vorzugsweise ist an dem Antrieb 1 eine Abtastscheibe angeordnet, welche von dem Sensor abgetastet wird und dadurch einen Schwenkwinkel des Antriebs 1 detektieren kann. Vorzugsweise ist die Abtastscheibe an dem Motor 3 oder an einem Gehäuse des Motors 3 angeordnet. Besonders bevorzugt ist die Abtastscheibe an einem Flansch 43 des Motors 3 bzw. des Gehäuses des Motors 3 befestigt und der Sensor ist an dem Halter 5 angeordnet. Figur 6 zeigt eine perspektivische Ansicht von ausgewählten Bauteilen des Antriebs 1. Dabei ist der Rotor 17 mit dem Zahnrad 19 abgebildet, wobei der Rotor 17 das Schubrohr 16 und die Gewindespindel 14 mit Mutter 15 radial umgibt. Zusätzlich kann zwischen dem Schubrohr 16 und dem Rotor 17 ein Führungsrohr 28 angeordnet sein. Das Führungsrohr 28 ist mit dem Gehäusedeckel 29 verbunden und verschließt damit eine Öffnung in dem Gehäuse 2. Weiterhin sind die Öffnungen 30 im Schubrohr 16 dargestellt sowie die Mutter 15 im Detail, mit den Haltefortsätzen 31 und der Brücke 32. Weiterhin sind das Gehäuse 2 und der Adapter 18 dargestellt.

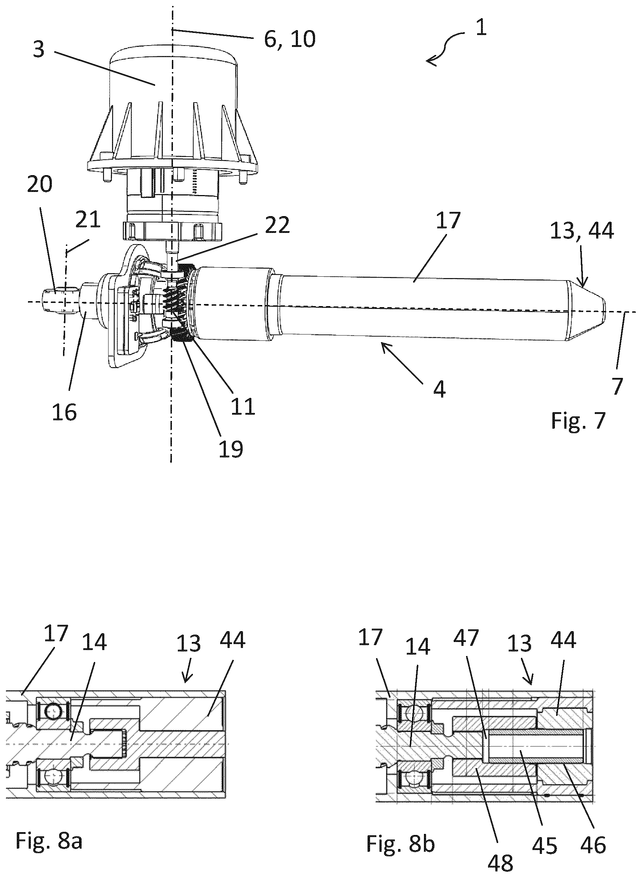

Figur 7 zeigt eine perspektivische Ansicht eines erfindungsgemäßen Antriebs 1 mit nur einer Getriebestufe 11, wobei der Antrieb 1 ein nicht gezeigtes Gehäuse 2, einen Motor 3 und einen Spindelantrieb 4 aufweist, entsprechend der Figur 1. Der Motor 3 und der Spindelantrieb 4 sind antriebstechnisch miteinander verbunden. Zur Befestigung des Antriebs 1 an oder in einer Klappe ist ein nicht gezeigter Halter 5 vorgesehen, welcher den Antrieb 1 aufnimmt. Weiterhin sind eine Drehachse 6 des Motors 3 und eine Drehachse 7 des Spindelantriebs 4 orthogonal zueinander angeordnet.

Weiterhin ist an einem Ende des Schubrohrs 16 eine Anbindungsstelle 20 angeordnet, welche mit einer Fahrzeugkarosserie verbunden wird, wobei das Schubrohr 16 und die Anbindungsstelle 20 in axialer Richtung fest miteinander verbunden sind und/oder das Schubrohr 16 und die Anbindungsstelle 20 drehfest miteinander verbunden sind. Die Anbindungsstelle 20 kann dabei insbesondere in Form eines Kugelgelenks oder in Form einer Durchgangsbohrung ausgebildet sein. Weiterhin kann die Verbindungstelle 20 auch eine Drehmomentabstützung für das Schubrohr 16 bereitstellen. Vorzugsweise ist die Anbindungsstelle 20 um eine Schwenkachse 21 schwenkbar, wobei die Schwenkachse 21 der Anbindungsstelle 20 parallel zur Drehachse 6 des Motors 3 verläuft.

Der Motor 3 kann beispielsweise ein bürstenloser Motor sein. Die Getriebestufe 11 besteht bevorzugt aus einem Schneckenradgetriebe 11. Die Getriebestufe 11 ist verbunden mit dem Zahnrad 19 des Rotors 17 und wird durch diese angetrieben. Der Motor 3 kann mit der ersten Getriebestufe 11 über eine flexible Welle 22 verbunden sein und/oder zwischen dem Motor 3 und der Antriebswelle 22 ist eine Oldham Kupplung angeordnet.

Des Weiteren ist zwischen dem Motor 3 und dem Spindelantrieb 4 eine Hysteresebremse 40 angeordnet. Dadurch kann die Drehachse 6 des Motors 3 gebremst werden, wodurch ein Halten der Klappe, insbesondere der Fahrzeugtür, in allen Positionen und Fahrzeuglagen erfolgen kann.

Des Weiteren ist eine Überlastkupplung 13 am Rotor 17 angeordnet. Diese besteht aus einem Adapter 44, welcher fest, insbesondere drehfest, mit dem Rotor 17 verbunden ist. In dem Adapter 44 können beispielsweise Federbleche drehfest formschlüssig fixiert sein. Die Federbleche sind auf der Gewindespindel 14 mit einer definierten Vorspannung montiert und der Adapter 44 ist drehbar auf der Gewindespindel 14 montiert. Zusätzlich kann ein Sicherungsring an dem Adapter 44 vorgesehen sein, welcher eine Axialverschiebung zwischen der Gewindespindel 14 und dem Adapter 44 verhindert. Bei einer Überschreitung eines bestimmten Drehmoments oder bei Einwirkung einer Lastspitze auf das System, können die Federbleche und die Gewindespindel 14 gegeneinander durchrutschen.

Weiterhin ist es auch möglich, dass anstatt von Federblechen ein Spannstift als Überlastkupplung 13 dient. Dazu ist in dem Adapter 44 eine Aufnahmebohrung für den Spannstift eingebracht. Der Adapter 44 kann einteilig aus gehärtetem Stahl oder aus Kunststoff mit einem gehärteten Einlegeteil ausgeführt sein. In die Aufnahmebohrung des Adapters 44 wird der Spannstift mit einer Seite eingepresst. Die gegenüberliegende Seite des Spannstiftes wird in eine Aufnahmebohrung der Gewindespindel 14 eingepresst. Dadurch kann ein Drehmoment vom Adapter 44 über den Spannstift auf die Gewindespindel 14 übertragen werden. Dies geschieht über den Reibschluss zwischen dem Adapter 44 und dem Spannstift sowie über den Reibschluss zwischen der Gewindespindel 14 und dem Spannstift. Bei einer Überschreitung eines bestimmten Drehmoments oder bei Einwirkung einer Lastspitze auf das System, können der Adapter 44, der Spannstift und/oder die Gewindespindel 14 gegeneinander durchrutschen. Um die Reibung in axialer Richtung zu minimieren kann ein Axiallager auf der Gewindespindel 14 vorgesehen sein. Eine Axialsicherung kann über Sicherungsscheiben, welche zwischen dem Adapter 44 und der Gewindespindel 14 angeordnet sind, realisiert werden.

Der Adapter 44 wird an dem Rotor 17 kraftschlüssig, formschlüssig und/oder stoffschlüssig drehfest gehalten.

Figur 8a zeigt eine Überlastkupplung 13 innerhalb des Adapters 44 mit nicht gezeigten Federblechen.

Figur 8b zeigt eine Überlastkupplung 13 innerhalb des Adapters 44 mit einem Spannstift 45. Eine Seite des Spannstifts 45 ist in einer Aufnahmebohrung 46 des Adapters 44 eingepresst und die gegenüberliegende Seite des Spannstifts 45 ist in einer Aufnahmebohrung 47 eines weiteren Adapters 48, welcher über eine kraftschlüssige und/oder formschlüssige Verbindung mit der Gewindespindel 14 verbunden ist, eingepresst. Alternativ kann auch in der Gewindespindel 14 eine Aufnahmebohrung angeordnet sein. Dann ist der weitere Adapter 48 nicht nötig.

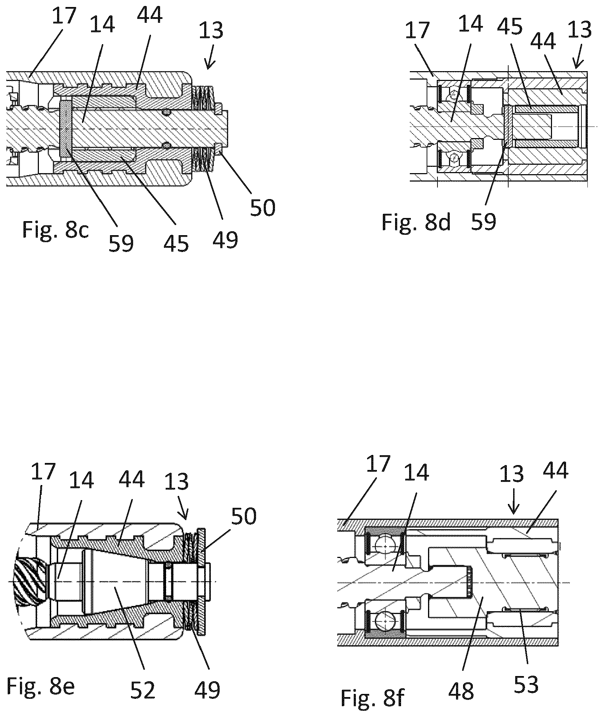

Figur 8c zeigt eine Überlastkupplung 13 mit einem Adapter 44. Hierbei ragt die Gewindespindel 14 über den Adapter 44 aus dem Rotor 17 heraus. Die Gewindespindel 14 weist im hinteren Bereich einen Spannstift 45 auf, welcher zwischen der Gewindespindel 14 und dem Adapter 44 angeordnet ist. Der Spannstift 45 wird in axialer Richtung durch einen Stift 59 fixiert, welcher durch eine Bohrung in der Gewindespindel 14 ragt. Die Gewindespindel 14 wird durch eine Federanordnung 49 vorgespannt und dadurch erfolgt in axialer Richtung eine Spielreduzierung der Gewindespindel 14 bzw. des Spannstifts 45. Dazu ist an der Gewindespindel eine Nut angeordnet in welche ein axiales Sicherungselement 50, insbesondere ein Sicherungsring, angeordnet ist. Somit stützt sich die Federanordnung 49 auf der einen Seite an dem Adapter 44 ab und auf der gegenüberliegenden Seite an dem axialen Sicherungselement 50. Bei der Auslösung der Überlastkupplung 13 können sich der Spannstift 45 und der Adapter 44 unabhängig voneinander verdrehen.

Figur 8d zeigt eine Überlastkupplung 13 innerhalb des Adapters 44 mit einem Spannstift 45. Die Gewindespindel 14 weist im hinteren Bereich einen Spannstift 45 auf, welcher zwischen der Gewindespindel 14 und dem Adapter 44 angeordnet ist. Der Spannstift 45 wird in axialer Richtung durch einen Stift 59 fixiert, welcher durch eine Bohrung in der Gewindespindel 14 ragt. Sobald die Reibkraft zwischen dem Spannstift 45 und dem Adapter 44 überwunden wird, aufgrund einer Überschreitung eines bestimmten Drehmoments oder es wirkt eine Lastspitze auf das System, kann sich die Gewindespindel 14 unabhängig von dem Rotor 17 drehen.

Figur 8e zeigt wie die Figur 8c eine Überlastkupplung 13 mit einem Adapter 44. Im Unterschied zu der Fig. 8c ist innerhalb des Adapters 44 ein Konus 52 angeordnet, wobei ein Ende des Konus über den Adapter 44 aus dem Rotor 17 herausragt. Der Konus 52 wird durch eine Federanordnung 49 vorgespannt und dadurch drehfest mit dem Adapter 44 verbunden. Dazu ist an dem Konus 52 eine Nut angeordnet in welche ein axiales Sicherungselement 50, insbesondere ein Sicherungsring, angeordnet ist. Somit stützt sich die Federanordnung 49 auf der einen Seite an dem Adapter 44 ab und auf der gegenüberliegenden Seite an dem axialen Sicherungselement 50. Die Auslösung der Überlastkupplung 13 kann durch unterschiedliche Federkonstanten der Federanordnung 49 und/oder unterschiedliche Durchmesser des Konus und/oder der Konizität angepasst werden. Der Konus 52 kann mit der Gewindespindel 14 kraftschlüssig und/oder formschlüssig verbunden sein.

Figur 8f zeigt eine Überlastkupplung 13 innerhalb des Adapters 44 mit einem Toleranzring 53 als Überlastkupplung 13. Der Toleranzring 53 ist zwischen dem Adapter 44 und einem weiteren Adapter 48 angeordnet. Alternativ kann der Toleranzring 53 zwischen dem Adapter 44 und der Gewindespindel 14 angeordnet sein. Dadurch kann auf den weiteren Adapter 48 verzichtet werden. Der Toleranzring 53 verbindet den Adapter 44 mit den weiteren Adapter 48 oder mit der Gewindespindel 14 und überträgt ein definiertes Drehmoment. Sobald das definierte Drehmoment überschritten wird, ermöglicht der Toleranzring 53 ein Verdrehen des Adapters bzw. der Gewindespindel relativ zueinander. Der Toleranzring 53 besteht vorzugsweise aus einem verprägten Metallstreifen, welcher zu einer offenen Hülse gerollt wird und entlang der Außenseite und/oder der Innenseite beispielsweise Wellungen oder Finger geformt oder eingeprägt sind. Bevorzugt weist der Toleranzring 53 einen seitlichen Spalt auf, der die Vorspannung des Toleranzrings 53 vorgibt. Besonders bevorzugt weist der Adapter 44 mindestens im Bereich des Toleranzrings 53 eine Stahleinlegeteil auf. Dadurch kann der Adapter 44 beispielsweise aus einem Kunststoff gefertigt werden.

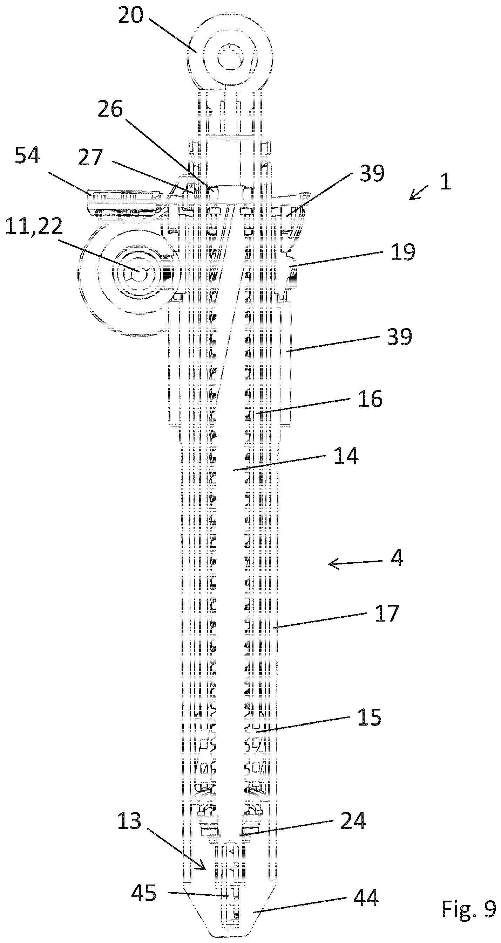

Figur 9 zeigt einen Schnitt des Antriebs 1, gemäß Figur 7, mit einem Sensor 27 zur Bestimmung des Drehwinkels der Gewindespindel 14. Der Sensor 27 kann ein Inkrementalsensor 27 sein und die Abtastscheibe 26 bzw. Codierung 26 kann eine Magnetscheibe 26 sein, welche fest bzw. drehfest mit der Gewindespindel 14 verbunden ist. Der Sensor 27 ist bevorzugt in einem Abstand zu dem Schubrohr 16 befestigt und mit einer Elektronik 54 verbunden, welche an oder in dem Gehäuse 2 befestigt ist. Die Verbindung zwischen dem Sensor 27 und der Elektronik 54 kann durch Kabel oder einer flexiblen Leiterplatte erfolgen. Das Material des Schubrohrs 16 ist bevorzugt nicht ferromagnetisch, so dass keine Abschirmung eines Magnetfelds möglich ist. Der Sensor 27 ist dabei bevorzugt an bzw. in dem Gehäuse 2 befestigt. Der Sensor 27 kann die Polwechsel der Magnetscheibe 26 erfassen und so den Drehwinkel der Gewindespindel 14 bestimmen.

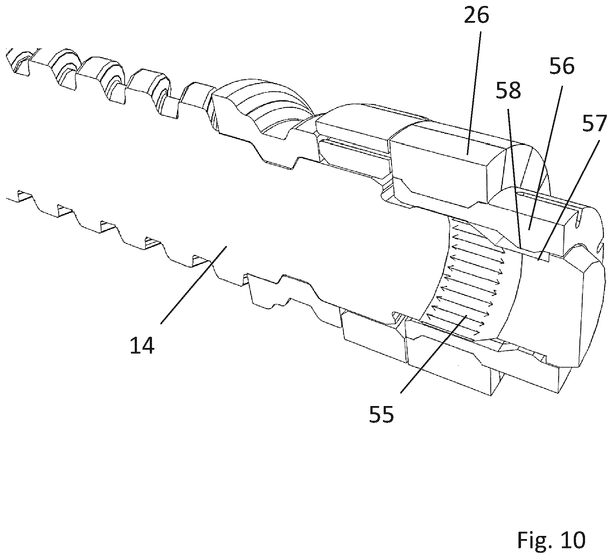

Figur 10 zeigt einen Schnitt eines Teils der Gewindespindel 14 und der Abtastscheibe 26. Um die Abtastscheibe 26 drehfest mit der Gewindespindel zu verbinden, ist vorzugsweise mindestens in dem Bereich der Abtastscheibe 26 eine Riffelung 55 an der Gewindespindel 14 angeordnet. Die Abtastscheibe 26 kann über einen Träger 56 mit der Gewindespindel 14 verbunden sein. Dazu wird die Abtastscheibe 26 beispielsweise mit dem Träger 56 verklebt und anschließend auf der Gewindespindel 14 befestigt, vorzugsweise kraftschlüssig und/oder formschlüssig. Um eine axiale Verschiebung der Abtastscheibe 26 zu verhindern kann an der Gewindespindel eine Nut 57 angeordnet sein, in welche eine Nase 58 des Trägers 56 eingreift und/oder eine Sicherungsscheibe vor dem Träger 56 angeordnet sein, welche den Träger 56 und die Abtastscheibe 26 in Position hält.

## Patentansprüche

1. Antrieb (1) für eine Klappe, wobei der Antrieb (1) ein Gehäuse (2), einen Motor (3) und einen Spindelantrieb (4) aufweist, wobei der Motor (3) und der Spindelantrieb (4) antriebstechnisch miteinander verbunden sind und eine motorische Verstellung der Klappe ermöglichen, wobei der Antrieb (1) die Klappe mindestens in eine geöffnete Position und eine geschlossene Position verfährt, wobei der Spindelantrieb (4) eine Gewindespindel (14) mit einer Mutter (15) und einem Schubrohr (16) aufweist und das Schubrohr (16) über die Mutter (15) mit der Gewindespindel (14) verbunden ist, wobei das Schubrohr (16) durch eine translatorische Bewegung verfahren wird, **dadurch gekennzeichnet, dass** der Spindelantrieb (4) innerhalb eines Rotors (17) angeordnet ist und der Motor (3) den Rotor (17) antreibt, wobei der Rotor (17) mit der Gewindespindel (14) über einen Adapter (44) verbunden ist, welcher drehfest mit dem Rotor (17) verbunden ist, **dadurch gekennzeichnet, dass** der Adapter (44) eine Überlastkupplung (13) aufweist.

2. Antrieb (1) nach Anspruch 1, **dadurch gekennzeichnet, dass** der Rotor (17) eine hohlzylindrische Geometrie aufweist.

3. Antrieb (1) nach einem der vorhergehenden Ansprüche, **dadurch gekennzeichnet, dass** der Rotor (17) die Gewindespindel (14) und das Schubrohr (16) radial umgibt.

4. Antrieb (1) nach einem der vorhergehenden Ansprüche, **dadurch gekennzeichnet, dass** zwischen dem Gehäuse (2) und dem Rotor (17) mindestens ein Lager (39) angeordnet ist.

5. Antrieb (1) nach einem der vorhergehenden Ansprüche, **dadurch gekennzeichnet, dass** ein Zahnrad (19) mit dem Rotor (17) verbunden ist.

6. Antrieb (1) nach einem der vorhergehenden Ansprüche, **dadurch gekennzeichnet, dass** der Motor (3) und der Spindelantrieb (4) über mindestens eine erste Getriebestufe (11) antriebstechnisch verbunden sind, wobei über die erste Getriebestufe (11) der Rotor (17) angetrieben wird.

7. Antrieb (1) nach Anspruch 6, **dadurch gekennzeichnet, dass** der Motor (3) über die erste Getriebestufe (11) eine zweite Getriebestufe (12) antreibt, welche wiederrum den Rotor (17) antreibt.

8. Antrieb (1) nach Anspruch 7 **dadurch gekennzeichnet, dass** zwischen dem Motor (3) und der ersten Getriebestufe (11) eine Oldham-Kupplung (23) und/oder eine flexible Welle (22) angeordnet ist.

9. Antrieb (1) nach einem der vorhergehenden Ansprüche, **dadurch gekennzeichnet, dass** der Spindelantrieb (4) zusätzlich ein Führungsrohr (28) aufweist, worüber eine Drehmomentabstützung des Schubrohrs (16) erfolgt.

10. Antrieb (1) nach Anspruch 9, **dadurch gekennzeichnet, dass** das Führungsrohr (28) mit einem Gehäusedeckel (29) verbunden ist.

11. Antrieb (1) nach einem der vorhergehenden Ansprüche, **dadurch gekennzeichnet, dass** an einem Ende des Schubrohrs (16) eine Anbindungsstelle (20) angeordnet ist, welche mit einer Fahrzeugkarosserie verbunden wird, wobei das Schubrohr (16) und die Anbindungsstelle (20) miteinander verbunden sind.

12. Antrieb (1) nach Anspruch 11, **dadurch gekennzeichnet, dass** die Anbindungsstelle (20) um eine Schwenkachse (21) schwenkbar ist.

13. Antrieb (1) nach Anspruch 12, **dadurch gekennzeichnet, dass** die Schwenkachse (21) der Anbindungsstelle (20) parallel zur Drehachse (6) des Motors (3) verläuft.

14. Antrieb (1) nach Anspruch 12, **dadurch gekennzeichnet, dass** die Schwenkachse (21) der Anbindungsstelle (20) und die Drehachse (6) des Motors (3) genau einen Schnittpunkt aufweisen.

15. Antrieb (1) nach einem der vorhergehenden Ansprüche, **dadurch gekennzeichnet, dass** der Antrieb (1) über einen Halter (5) an der Klappe befestigt ist.

16. Antrieb (1) nach Anspruch 15, **dadurch gekennzeichnet, dass** das Gehäuse (2) in dem Halter (5) über mindestens zwei Lagerstellen (8, 9) gehalten ist.

17. Antrieb (1) nach Anspruch 15 oder 16, **dadurch gekennzeichnet, dass** der Halter (5) eine im Querschnitt U-förmige Geometrie aufweist.

18. Antrieb (1) nach einem der vorhergehenden Ansprüche, **dadurch gekennzeichnet, dass** eine Drehachse (6) des Motors (3) und eine Drehachse (7) des Spindelantriebs (4) windschief zueinander angeordnet sind oder genau einen Schnittpunkt aufweisen.

19. Antrieb (1) nach einem der vorhergehenden Ansprüche, **dadurch gekennzeichnet, dass** der Antrieb (1) um eine Schwenkachse (10) schwenkbar gelagert ist.

20. Antrieb (1) nach Anspruch 19, **dadurch gekennzeichnet, dass** die Schwenkachse (10) parallel zu der Drehachse (6) des Motors (3) verläuft.

21. Antrieb (1) nach Anspruch 19, **dadurch gekennzeichnet, dass** die Schwenkachse (10) windschief zu der Drehachse (6) des Motors (3) verläuft oder die Schwenkachse (10) und die Drehachse (6) des Motors (3) genau einen Schnittpunkt aufweisen.

22. Antrieb (1) nach einem der vorhergehenden Ansprüche, **dadurch gekennzeichnet, dass** an dem Rotor (17) eine Abtastscheibe (26) angeordnet ist, welche von einem Sensor (27), der innerhalb des Gehäuses (2) angeordnet ist, abgetastet wird.

23. Antrieb (1) nach einem der vorhergehenden Ansprüche, **dadurch gekennzeichnet, dass** an der Gewindespindel (14) eine Abtastscheibe (26) angeordnet ist, welche von einem Sensor (27), der innerhalb des Gehäuses (2) angeordnet ist, abgetastet wird.

24. Antrieb (1) nach Anspruch 23, **dadurch gekennzeichnet, dass** die Abtastscheibe (26) fest mit der Gewindespindel (14) verbunden ist.

25. Antrieb (1) nach einem der vorhergehenden Ansprüche, **dadurch gekennzeichnet, dass** mindestens jeweils eine Abdichtung (41) zwischen dem Schubrohr (16) und dem Gehäuse (2) und zwischen dem Rotor (17) und dem Gehäuse (2) angeordnet ist.

26. Antrieb (1) nach einem der vorhergehenden Ansprüche, **dadurch gekennzeichnet, dass** zwischen dem Motor (3) und dem Spindelantrieb (4) eine Hysteresebremse (40) angeordnet ist.

27. Antrieb (1) nach einem der vorhergehenden Ansprüche, **dadurch gekennzeichnet, dass** in unmittelbarer Nähe zu dem Antrieb (1) oder an dem Antrieb (1) ein Sensor angeordnet ist, welcher einen Schwenkwinkel des Antriebs (1) detektiert.

28. Antrieb (1) nach Anspruch 27, **dadurch gekennzeichnet, dass** an dem Antrieb (1) eine Codierung angeordnet ist, welche von dem Sensor abgetastet wird und dadurch einen Schwenkwinkel des Antriebs (1) detektiert.

29. Antrieb (1) nach Anspruch 28, **dadurch gekennzeichnet, dass** die Codierung an dem Motor (3) oder an einem Gehäuse des Motors (3) angeordnet ist.

30. Antrieb (1) nach Anspruch 28, **dadurch gekennzeichnet, dass** die Codierung an dem Halter (5) angeordnet ist.

## Claims

1. A drive (1) for a flap, wherein the drive (1) has a housing (2), a motor (3) and a spindle drive (4), wherein the motor (3) and the spindle drive (4) are drivingly connected to one another and make a motorized adjustment of the flap possible, wherein the drive (1) moves the flap at least into an open position and a closed position, wherein the spindle drive (4) has a threaded spindle (14) with a nut (15) and a thrust tube (16) and the thrust tube (16) is connected to the threaded spindle (14) by means of the nut (15), wherein the thrust tube (16) is moved by a translational movement, **characterized in that** the spindle drive (4) is arranged inside a rotor (17) and the motor (3) drives the rotor (17), wherein the rotor (17) is connected to the threaded spindle (14) by means of an adapter (44) which is connected to the rotor (17) in a rotationally fixed manner, **characterized in that** the adapter (44) has an overload clutch (13).

2. The drive (1) according to claim 1, **characterized in that** the rotor (17) has a hollow cylindrical geometry.

3. The drive (1) according to any of the preceding claims, **characterized in that** the rotor (17) surrounds the threaded spindle (14) and the thrust tube (16) radially.

4. The drive (1) according to any of the preceding claims, **characterized in that** at least one bearing (39) is arranged between the housing (2) and the rotor (17).

5. The drive (1) according to any of the preceding claims, **characterized in that** a gear wheel (19) is connected to the rotor (17).

6. The drive (1) according to any of the preceding claims, **characterized in that** the motor (3) and the spindle drive (4) are drivingly connected via at least a first gear stage (11), wherein the rotor (17) is driven via the first gear stage (11).

7. The drive (1) according to claim 6, **characterized in that** the motor (3) drives a second gear stage (12), which in turn drives the rotor (17), via the first gear stage (11).

8. The drive (1) according to claim 7, **characterized in that** an Oldham coupling (23) and/or a flexible shaft (22) is arranged between the motor (3) and the first gear stage (11).

9. The drive (1) according to any of the preceding claims, **characterized in that** the spindle drive (4) additionally has a guide tube (28), by means of which a torque support of the thrust tube (16) is effected.

10. The drive (1) according to claim 9, **characterized in that** the guide tube (28) is connected to a housing cover (29).

11. The drive (1) according to any of the preceding claims, **characterized in that** at one end of the thrust tube (16) a connecting point (20) is arranged, which is connected to a vehicle body, wherein the thrust tube (16) and the connecting point (20) are connected to one another.

12. The drive (1) according to claim 11, **characterized in that** the connecting point (20) is pivotable about a pivot axis (21).

13. The drive (1) according to claim 12, **characterized in that** the pivot axis (21) of the connecting point (20) extends parallel to the axis of rotation (6) of the motor (3).

14. The drive (1) according to claim 12, **characterized in that** the pivot axis (21) of the connecting point (20) and the axis of rotation (6) of the motor (3) have exactly one intersection.

15. The drive (1) according to any of the preceding claims, **characterized in that** the drive (1) is fastened to the flap via a holder (5).

16. The drive (1) according to claim 15, **characterized in that** the housing (2) is held in the holder (5) via at least two bearing points (8, 9).

17. The drive (1) according to claim 15 or 16, **characterized in that** the holder (5) has a U-shaped geometry in cross section.

18. The drive (1) according to any of the preceding claims, **characterized in that** an axis of rotation (6) of the motor (3) and an axis of rotation (7) of the spindle drive (4) are arranged skewed relative to one another or have exactly one intersection.

19. The drive (1) according to any of the preceding claims, **characterized in that** the drive (1) is mounted so as to be pivotable about a pivot axis (10).

20. The drive (1) according to claim 19, **characterized in that** the pivot axis (10) extends parallel to the axis of rotation (6) of the motor (3).

21. The drive (1) according to claim 19, **characterized in that** the pivot axis (10) extends skewed relative to the axis of rotation (6) of the motor (3) or the pivot axis (10) and the axis of rotation (6) of the motor (3) have exactly one intersection.

22. The drive (1) according to any of the preceding claims, **characterized in that** arranged on the rotor (17) there is a coding disc (26), which is scanned by a sensor (27) arranged inside the housing (2).

23. The drive (1) according to any of the preceding claims, **characterized in that** arranged on the threaded spindle (14) there is a coding disc (26), which is scanned by a sensor (27) arranged inside the housing (2).

24. The drive (1) according to claim 23, **characterized in that** the coding disc (26) is fixedly connected to the threaded spindle (14).

25. The drive (1) according to any of the preceding claims, **characterized in that** at least in each case one seal (41) is arranged between the thrust tube (16) and the housing (2) and between the rotor (17) and the housing (2).

26. The drive (1) according to any of the preceding claims, **characterized in that** a hysteresis brake (40) is arranged between the motor (3) and the spindle drive (4).

27. The drive (1) according to any of the preceding claims, **characterized in that** a sensor which detects a pivoting angle of the drive (1) is arranged in immediate proximity to the drive (1) or on the drive (1).

28. The drive (1) according to claim 27, **characterized in that** a coding, which is scanned by the sensor and thereby detects a pivoting angle of the drive (1), is arranged on the drive (1).

29. The drive (1) according to claim 28, **characterized in that** the coding is arranged on the motor (3) or on a housing of the motor (3).

30. The drive (1) according to claim 28, **characterized in that** the coding is arranged on the holder (5).

## Revendications

1. Entraînement (1) pour un volet, l'entraînement (1) présentant un boîtier (2), un moteur (3) et un entraînement à broche (4), le moteur (3) et l'entraînement à broche (4) étant reliés l'un à l'autre en termes d'entraînement et permettant un réglage motorisé du volet, l'entraînement (1) déplaçant le volet au moins dans une position ouverte et une position fermée, l'entraînement à broche (4) présentant une broche filetée (14) avec un écrou (15) et un tube coulissant (16), et le tube coulissant (16) étant relié à la broche filetée (14) par l'intermédiaire de l'écrou (15), le tube coulissant (16) étant déplacé par un mouvement de translation, **caractérisé en ce que** l'entraînement à broche (4) est agencé à l'intérieur d'un rotor (17) et le moteur (3) entraîne le rotor (17), le rotor (17) étant relié à la broche filetée (14) par l'intermédiaire d'un adaptateur (44) qui est relié au rotor (17) de manière solidaire en rotation, **caractérisé en ce que** l'adaptateur (44) présente un accouplement de surcharge (13).

2. Entraînement (1) selon la revendication 1, **caractérisé en ce que** le rotor (17) présente une géométrie cylindrique creuse.

3. Entraînement (1) selon l'une des revendications précédentes, **caractérisé en ce que** le rotor (17) entoure radialement la broche filetée (14) et le tube coulissant (16).

4. Entraînement (1) selon l'une des revendications précédentes, **caractérisé en ce qu'**au moins un palier (39) est agencé entre le boîtier (2) et le rotor (17).

5. Entraînement (1) selon l'une des revendications précédentes, **caractérisé en ce qu'**une roue dentée (19) est reliée au rotor (17).

6. Entraînement (1) selon l'une des revendications précédentes, **caractérisé en ce que** le moteur (3) et l'entraînement à broche (4) sont reliés en termes d'entraînement par au moins un premier étage de transmission (11), le rotor (17) étant entraîné par le premier étage de transmission (11).

7. Entraînement (1) selon la revendication 6, **caractérisé en ce que** le moteur (3) entraîne, par l'intermédiaire du premier étage de transmission (11), un deuxième étage de transmission (12) qui entraîne à son tour le rotor (17).

8. Entraînement (1) selon la revendication 7, **caractérisé en ce qu'**un accouplement d'Oldham (23) et/ou un arbre flexible (22) est agencé entre le moteur (3) et le premier étage de transmission (11).

9. Entraînement (1) selon l'une des revendications précédentes, **caractérisé en ce que** l'entraînement à broche (4) présente en outre un tube de guidage (28) au moyen duquel est réalisé un support de couple du tube coulissant (16).

10. Entraînement (1) selon la revendication 9, **caractérisé en ce que** le tube de guidage (28) est relié à un couvercle de boîtier (29).

11. Entraînement (1) selon l'une des revendications précédentes, **caractérisé en ce qu'**un point de raccordement (20) qui est relié à une carrosserie de véhicule est ménagé à une extrémité du tube coulissant (16), le tube coulissant (16) et le point de raccordement (20) étant reliés l'un à l'autre.

12. Entraînement (1) selon la revendication 11, **caractérisé en ce que** le point de raccordement (20) est apte à pivoter autour d'un axe de pivotement (21).

13. Entraînement (1) selon la revendication 12, **caractérisé en ce que** l'axe de pivotement (21) du point de raccordement (20) s'étend parallèlement à l'axe de rotation (6) du moteur (3).

14. Entraînement (1) selon la revendication 12, **caractérisé en ce que** l'axe de pivotement (21) du point de raccordement (20) et l'axe de rotation (6) du moteur (3) présentent exactement un point d'intersection.

15. Entraînement (1) selon l'une des revendications précédentes, **caractérisé en ce que** l'entraînement (1) est fixé au volet par l'intermédiaire d'un support (5).

16. Entraînement (1) selon la revendication 15, **caractérisé en ce que** le boîtier (2) est maintenu dans le support (5) par au moins deux points d'appui (8, 9).

17. Entraînement (1) selon la revendication 15 ou 16, **caractérisé en ce que** le support (5) présente en section transversale une géométrie en forme de U.

18. Entraînement (1) selon l'une des revendications précédentes, **caractérisé en ce qu'**un axe de rotation (6) du moteur (3) et un axe de rotation (7) de l'entraînement à broche (4) sont agencés de manière à être gauches l'un par rapport à l'autre ou présentent exactement un point d'intersection.

19. Entraînement (1) selon l'une des revendications précédentes, **caractérisé en ce que** l'entraînement (1) est monté de manière pivotante autour d'un axe de pivotement (10).

20. Entraînement (1) selon la revendication 19, **caractérisé en ce que** l'axe de pivotement (10) s'étend parallèlement à l'axe de rotation (6) du moteur (3).

21. Entraînement (1) selon la revendication 19, **caractérisé en ce que** l'axe de pivotement (10) s'étend de manière à être gauche par rapport à l'axe de rotation (6) du moteur (3) ou **en ce que** l'axe de pivotement (10) et l'axe de rotation (6) du moteur (3) présentent exactement un point d'intersection.

22. Entraînement (1) selon l'une des revendications précédentes, **caractérisé en ce qu'**un disque de balayage (26) qui est balayé par un capteur (27) agencé à l'intérieur du boîtier (2) est agencé sur le rotor (17).

23. Entraînement (1) selon l'une des revendications précédentes, **caractérisé en ce qu'**un disque de balayage (26) qui est balayé par un capteur (27) agencé à l'intérieur du boîtier (2) est agencé sur la broche filetée (14).

24. Entraînement (1) selon la revendication 23, **caractérisé en ce que** le disque de balayage (26) est relié de manière fixe à la broche filetée (14).

25. Entraînement (1) selon l'une des revendications précédentes, **caractérisé en ce qu'**au moins un joint d'étanchéité (41) est respectivement agencé entre le tube coulissant (16) et le boîtier (2) et entre le rotor (17) et le boîtier (2).

26. Entraînement (1) selon l'une des revendications précédentes, **caractérisé en ce qu'**un frein à hystérésis (40) est agencé entre le moteur (3) et l'entraînement à broche (4).

27. Entraînement (1) selon l'une des revendications précédentes, **caractérisé en ce qu'**un capteur qui détecte un angle de pivotement de l'entraînement (1) est agencé à proximité immédiate de l'entraînement (1) ou sur l'entraînement (1).

28. Entraînement (1) selon la revendication 27, **caractérisé en ce qu'**un codage qui est balayé par le capteur et détecte ainsi un angle de pivotement de l'entraînement (1) est aménagé sur l'entraînement (1).

29. Entraînement (1) selon la revendication 28, **caractérisé en ce que** le codage est aménagé sur le moteur (3) ou sur un boîtier du moteur (3).

30. Entraînement (1) selon la revendication 28, **caractérisé en ce que** le codage est aménagé sur le support (5).
